(19) **Europäisches Patentamt**

**European Patent Office**

**Office européen des brevets**

(11) **EP 1 385 716 B1**

(12) **EUROPÄISCHE PATENTSCHRIFT**

(45) Veröffentlichungstag und Bekanntmachung des Hinweises auf die Patenterteilung:
**06.04.2005 Patentblatt 2005/14**

(21) Anmeldenummer: 02740330.2

(22) Anmeldetag: **06.05.2002**

(51) Int Cl.⁷: **B60N 2/02**

(86) Internationale Anmeldenummer:
**PCT/DE2002/001683**

(87) Internationale Veröffentlichungsnummer:
**WO 2002/090139 (14.11.2002 Gazette 2002/46)**

(54) **VERFAHREN UND VORRICHTUNG ZUR BESTIMMUNG EINER POSITION EINES DURCH EINE ANTRIEBSVORRICHTUNG VERSTELLBAREN TEILS EINES KRAFTFAHRZEUGSITZES**

METHOD AND DEVICE FOR DETERMINING A POSITION OF A PART OF A MOTOR VEHICLE SEAT WHICH CAN BE DISPLACED BY MEANS OF A DRIVE DEVICE

PROCEDE ET DISPOSITIF POUR DETERMINER LA POSITION D'UNE PARTIE D'UN SIEGE DE VEHICULE AUTOMOBILE POUVANT ETRE DEPLACEE PAR UN DISPOSITIF D'ENTRAINEMENT

(84) Benannte Vertragsstaaten:
**DE ES FR GB IT**

(30) Priorität: **10.05.2001 DE 10122586**

(43) Veröffentlichungstag der Anmeldung:
**04.02.2004 Patentblatt 2004/06**

(73) Patentinhaber: **Brose Fahrzeugteile GmbH & Co. KG, Coburg**
**96450 Coburg (DE)**

(72) Erfinder:
• **WOLLER, Alexander**
**97273 Kürnach (DE)**
• **CARL, Ingo**
**97469 Gochsheim (DE)**
• **BELOCH, Klaus**
**96247 Michelau (DE)**

(74) Vertreter: **Baumgärtel, Gunnar, Dr. et al Patentanwälte Maikowski & Ninnemann, Postfach 15 09 20 10671 Berlin (DE)**

(56) Entgegenhaltungen:
WO-A-00/12348          DE-A- 4 108 295
US-A- 4 907 153

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren und eine Vorrichtung zur Bestimmung einer Position eines durch eine elektrische Antriebsvorrichtung verstellbaren Teils eines Kraftfahrzeugsitzes.

Aus der DE-C-198 55 996 ist ein Verfahren bzw. eine Vorrichtung zur Bestimmung einer Position eines durch eine elektrische Antriebsvorrichtung verstellbaren Teils eines Kraftfahrzeugsitzes bekannt, bei dem bzw. bei der zusätzlich die Position des verstellbaren Teils eines Kraftfahrzeugsitzes durch die Auswertung eines in Abhängigkeit einer Antriebsbewegung der elektrischen Antriebsvorrichtung generierten Signals bestimmt wird.

Aus der DE-A1-41 08 295 ist eine Motorsitzvorrichtung bekannt, die einen Verschiebemotor zum Verschieben eines Kraftfahrzeugsitzes in Vorwärts- oder Rückwärtsrichtung, einen Hebemotor zum Verfahren des Sitzes nach oben und nach unten und einen Neigemotor zu Einstellung eines Neigungswinkels der Rückenlehne des Sitzes aufweist. In einem Voreinstellungsspeicher werden Betriebsdaten der entsprechenden Motoren in Reaktion auf einen Voreinstellungsvorgang abgespeichert. Eine Speicherantriebseinrichtung treibt die Motoren entsprechend der Betriebsdaten, die in dem Voreinstellungsspeicher gespeichert sind, an. Anhand einer Betätigung einer manuellen Schalteinrichtung werden die Motoren durch eine Handantriebseinrichtung angetrieben. Die Steuerung der Motoren erfolgt durch einen Steuerungsmechanismus unter Verarbeitung der Betriebsdaten, die von den jeweiligen Motoren während ihrer Trägheitsrotationen abgegeben werden, als Signale in der gleichen Richtung wie unmittelbar vor den Trägheitsrotationen der jeweiligen Motoren, in einem Fall der Betätigung der manuellen Schalteinrichtung, wenn die Motoren von der Speicherantriebseinrichtung angetrieben werden.

Die Verstelleinrichtungen moderner Kraftfahrzeugsitze weisen eine Selbsthemmung der Verstellelemente auf, um im Crashfall die Sicherheit des Kraftfahrzeugsitzes zu gewährleisten und eine Vorverlagerung des Kraftfahrzeugsitzes durch die Crashkraft zu verhindern. Aufgrund dieser Selbsthemmungen sind Verstelleinrichtungen moderner Kraftfahrzeugsitze tendenziell schwergängig, so dass das Problem von Fehlern der angefahrenen Position durch Trägheitsrotationen der Verstellsysteme mit den antreibenden Motoren eher geringfügig ist. Fraglich ist auch, ob die Genauigkeit der Ermittlung der aktuellen Position für ein Anfahren der gespeicherten Position ausreichend ist.

Der Erfindung liegt die Aufgabe zu Grunde, während des Betriebes einer elektrischen Antriebseinrichtung auftretende Fehler in der Positionsmessung eines verstellbaren Teils eines Kraftfahrzeugsitzes zu korrigieren.

Diese Aufgabe wird durch das Verfahren zur Bestimmung einer Position eines durch eine elektrische Antriebsvorrichtung verstellbaren Teils eines Kraftfahrzeugsitzes mit den Merkmalen des Patentanspruchs 1 und der Vorrichtung zur Bestimmung einer Position eines durch eine elektrische Antriebsvorrichtung verstellbaren Teils eines Kraftfahrzeugsitzes mit den Merkmalen des Patentanspruchs 18 gelöst. Vorteilhafte Weiterbildungen der Erfindung sind den Unteransprüchen zu entnehmen.

Demgemäss wird zur Bestimmung einer Position eines durch eine elektrische Antriebsvorrichtung verstellbaren Teils eines Kraftfahrzeugsitzes durch Auswertung eines in Abhängigkeit einer Antriebsbewegung der elektrischen Antriebsvorrichtung generierten Signals

- die elektrische Antriebsvorrichtung mit dem verstellbaren Teil derart elastisch gekoppelt, dass zumindest temporär eine asynchrone Bewegung zwischen der elektrischen Antriebsvorrichtung und dem verstellbaren Teil auftreten kann,
- und zusätzlich das Drehmoment ($M_{Mot}$) und/oder mindestens eine mit diesem korrelierende Kenngröße der elektrischen Antriebsvorrichtung zur Korrektur eines durch eine asynchrone Bewegung zwischen der elektrischen Antriebsvorrichtung und dem verstellbaren Teil verursachten Positionsfehlers ausgewertet.

Wird das verstellbare Teil durch die Antriebsvorrichtung direkt, also ohne eine Kraftübertragung über Getriebeelemente oder Koppelelemente, angetrieben, könnte die Bewegung der Antriebsvorrichtung und des verstellbaren Teils synchron erfolgen. In der Regel werden jedoch zur Übertragung von Antriebsmoment, insbesondere Antriebsdrehmoment, und Antriebsgeschwindigkeit, insbesondere der Drehzahl des Antriebs, Getriebeelemente und Koppelelemente genutzt, die eine Übersetzung zu niedrigeren Drehzahlen beziehungsweise zu höheren Drehmomenten zu ermöglichen. Anstelle der für Kraftfahrzeugsitze üblichen Elektromotoren mit einem rotierenden Rotor können auch andere Antriebsvorrichtungen, wie Linearmotoren oder eine Hydraulik mit entsprechenden Getriebemitteln, verwendet werden.

Die Antriebskraft der Antriebsvorrichtung verursacht beispielsweise elastische Verformung der Getriebeelemente oder der Koppelelemente. Diese elastischen Verformungen führen zu einer Abweichung der Proportionalität zwischen der Antriebsbewegung der Antriebsvorrichtung und der Verstellbewegung des verstellbaren Teils. Aufgrund dieser Abweichung von der Proportionalität bewegen sich bis zum Aufspannen der Elastizität die Antriebsvorrichtung und das verstellbare Teil asynchron. Diese temporäre Asynchronität führt zu einer Differenz zwischen der durch das Signal bestimmten Antriebsbewegung und der Bewegung des verstellbaren Teils und damit zu einem Positionsfehler der aktuellen Position des verstellbaren Teils.

Neben einer elastischen Kopplung sind noch weitere Fehlerquellen für den Positionsfehlers möglich. Beispielsweise weisen Getriebeelemente oder Koppelelemente häufig ein signifikantes Spiel zwischen den Verstellrichtungen auf. Im Falle eines Umschaltens der Verstellrichtung führt das Spiel zu einer kurzzeitigen asynchronen Bewegung zwischen der Antriebsvorrichtung und dem verstellbaren Teil. Eine weitere mögliche Fehlerquelle ist eine plastische Verformung von Getriebeelementen oder Koppelelementen. Ein, beispielsweise durch Blockfahren verspanntes Verstellsystem führt nach einiger Zeit zu einem Setzen, also zu plastischen Verformungen der zuvor elastisch gespannten Elemente und damit zu einer weiteren Form der asynchronen Bewegung.

Zur Bestimmung der Position des verstellbaren Teils wird ein Signal ausgewertet, das in Abhängigkeit von einer Antriebsbewegung, insbesondere einer Rotation einer Antriebsachse eines Elektromotors, generiert wird. Zu dieser Generierung können verschiedenste Messverfahren verwendet werden. Beispielsweise ist das Signal ein zum Drehwinkel proportionales Spannungssignal, Stromsignal oder Frequenzsignal. Vorteilhafterweise werden digitale, einen bestimmten Drehwinkel oder eine Antriebsstrecke charakterisierende Impulse ausgewertet. Diese Impulse werden insbesondere durch mindestens einen Hallsensor generiert, wobei beispielsweise ein auf der Antriebswelle angeordneter Magnet als Geber des Meßsystems fungiert. Alternativ ist es möglich, von der Antriebsbewegung generierte binäre Signale auszuwerten.

Beispielsweise können Lochscheiben verwendet werden, um unterschiedliche Drehwinkel zu detektieren.

Je nach der Beschaffenheit des Signals und der Form der Abbildung der Antriebsbewegung auf eine rechentechnisch verarbeitbare Information wird das Signal ausgewertet. Zur Auswertung wird das Signal, beispielsweise mittels eines Analog-Digital-Umwandlers, quantisiert oder das analoge Signal wird mittels eines Schwellwertschalters in digitale Impulse gewandelt. Die rechentechnisch auswertbaren Signale werden in einem Mikrocontroller zur Auswertung beispielsweise gezählt und bestimmten Positionen des verstellbaren Teils zugeordnet. Weiterhin dienen die Signale vorteilhafterweise zur Bestimmung von Memory-Positionen der Verstellungen und zum automatischen positionsgerechten Anfahren der Memory-Positionen, wie es beispielsweise in der DE 41 08 295 A1 beschrieben ist.

Insbesondere erfolgt die Generierung der Signale innerhalb, oder in der Nähe der Antriebsvorrichtung, um eine zusätzliche Verkabelung zu weiteren, an anderen Orten des Verstellsystems positionierten Sensoren einzusparen. Kann die Verstellbewegung des verstellbaren Teils direkt sensiert werden, wird der Vorteil der Verbindungseinsparung aufgegeben und die der Erfindung zu Grunde liegende Problematik könnte auf eine andere Weise gegebenenfalls einfacher gelöst werden. Alternativ zu einem an der Antriebsachse oder einem anderen Antriebselement angeordneten Sensorgeber (mit zugeordnetem Sensor) wird als Signal die Rippel des Motorstroms ausgewertet. Das an sich bekannte Rippel-Zählverfahren ist mit der erfindungsgemäßen Korrektur von Positionsfehlern besonders vorteilhaft anzuwenden, da auch eine Korrektur nach Abschalten des Motorstromes möglich ist.

Erfindungswesentlich ist die Auswertung einer Kenngröße zusätzlich zum bereits erwähnten Signal. Die Kenngröße kann dabei nicht alleine aus der Antriebsbewegung generiert werden, sondern benötigt eine weitere, von dem Signal unabhängige Größe, beispielsweise eine Zeitgröße einer Uhr oder eines anderen Zeitgebers. Beispielsweise wird die Zeitgröße als Kenngröße verwendet oder die Zeitgröße in Kombination mit dem Signal als Kenngröße ausgewertet, die zur Bestimmung und Auswertung einer Geschwindigkeit des verstellbaren Teils dient. Die Kenngröße charakterisiert Eigenschaften der Verstellung oder bildet mindestens eine die Verstellung beeinflussende Größe ab. Ausgehend von dem zuvor genannten Beispiel wird die Geschwindigkeit einer ungeregelten Antriebsvorrichtung als Maß für Schwergängigkeiten des Verstellsystems und damit zur Bestimmung des Maßes einer elastischen Verformung ausgewertet.

Neben dem zuvor genannten Beispiel werden vorteilhafterweise andere Kenngrößen ausgewertet. In Abhängigkeit von der auszuwertenden Kenngröße werden an die Art der Kenngröße angepasste Auswertungsverfahren angewendet. Während z.B. die Zeitgröße oder Steuergrößen, wie beispielsweise die Motorstromrichtung, zur Auswertung bereits in rechentechnisch verarbeitbarer Form einer Recheneinheit zur Verfügung stehen, werden andere zu ermittelnde Kenngrößen, wie Einsitzgewicht des Insassen oder die Umgebungstemperatur, mittels Sensoren gemessen und gegebenenfalls in eine rechentechnisch verarbeitbare Information gewandelt. Sind mehrere Daten oder Konstanten zur Bestimmung und Auswertung der Kenngröße nötig wird die Kenngröße mittels eines Algorithmus berechnet oder aus empirisch ermittelten Tabellen ausgelesen. In einer vorteilhaften Ausgestaltung der Erfindung werden mehrere Kenngrößen für unterschiedliche auf die Verstellung wirkende Einflüsse kombiniert ausgewertet.

Die Korrektur des Positionsfehlers ermöglicht unterschiedlichste Einflüsse auf die Asynchronität zwischen der Antriebsvorrichtung und dem verstellbaren Teil rechentechnisch zu kompensieren. Hierzu erfolgt die Korrektur des Positionsfehlers mit Hilfe eines Algorithmus, empirisch ermittelter Werte oder anderer, beispielsweise sukzessiver Verfahren. Besondere Weiterbildungen der Korrektur werden folgend dargelegt.

In einer vorteilhaften Weiterbildung der Erfindung wird der Positionsfehler in Abhängigkeit von einer zur Korrektur zugeordneten Klasse korrigiert. Die Klassen werden durch empirische Verfahren zuvor für eine bestimmte Genauigkeit der Korrektur festgelegt, oder alternativ anhand mehrerer Verstellstrecken selbstlernend optimiert. Welche Klasse in einem Verstellvorgang als aktuelle Klasse zur Korrektur des Positionsfehlers festgelegt wird, wird vorteilhafterweise durch einen Vergleich der einen oder mehrerer Kenngrößen mit einem oder mehreren Schwellwerten ermittelt.

Die Werte zu Korrektur der für diesen Korrekturfall maßgeblichen Klasse werden folgend gemessen, berechnet und/ oder aus einem Speicher ausgelesen.

In einer Ausgestaltung der Weiterbildung der Erfindung wird jeder Klasse ein Korrekturfaktor zur Korrektur des Positionsfehlers zugeordnet. Als Korrekturfaktoren dienen beispielsweise ein positives und ein negatives Vorzeichen. Wird in diesem Beispiel als Kenngröße das Steuersignal zur Bestromung der Antriebsvorrichtung verwendet, werden für die nach der Bestromung gültige Klasse "negativ" die eingehenden Signale zur Bewegung der Antriebseinheit mit dem Korrekturfaktur "- 1", also negativ gewichtet, da sich auf Grund der Entspannung der Elastizität die Antriebsachse entgegen der Verstellung bewegt und zum Beginn der Verstellung für das Aufspannen der Elastizität der gleiche absolute Positionsfehler entsteht. In diesem dargelegten Korrekturverfahren werden somit zur Gewichtung Daten des Signals in additive Daten und subtraktive Daten unterteilt. Folgend wird die aktuelle Position entsprechend der additiven Daten in Verstellrichtung beziehungsweise subtraktiven Daten gegen die Verstellrichtung korrigiert. Alternativ ist der Korrekturfaktor ein Proportionalitätsfaktor. Wird die Klasse beispielsweise über ein Drehmoment der Antriebsvorrichtung als Kenngröße ermittelt, ist in einen Bereich des Spannens der Elastizität der Positionsfehler proportional zum Drehmoment der Antriebsvorrichtung. Dieser proportionale Anteil des Positionsfehlers wird der Abschaltung des Motorstroms folgend mittels des Korrekturfaktors korrigiert.

In einer weiteren vorteilhaften Ausgestaltung der Weiterbildung der Erfindung wird jeder Klasse eine Korrekturkonstante zur Korrektur des Positionsfehlers zugeordnet. So wird besonders einfach, ohne zusätzlich nötige Rechenleistung der Positionsfehler korrigiert, indem die Korrekturkonstante aus einem nicht-flüchtigen Speicher ausgelesen wird. Korrekturkonstanten werden hierzu zuvor empirisch ermittelt und für das entsprechende Verstellsystem in dem Speicher abgelegt. Besonders vorteilhaft wird die Korrekturkonstante mit weiteren Faktoren, beispielsweise dem Korrekturfaktor oder einem Potenzfaktor, eines Algorithmus kombiniert ausgenutzt, um den Positionsfehler zu korrigieren.

Neben Korrekturfaktoren und Korrekturkonstanten sind weitere funktionelle Zusammenhänge, wie Quadratfunktionen oder Wurzelfunktionen denkbar. Besonders vorteilhaft werden funktionelle Zusammenhänge genutzt, um zur Korrektur das Signal in Abhängigkeit von der Kenngröße zu gewichten. Die Gewichtung ist dabei nicht auf eine Klasseneinteilung beschränkt, sondern wertet alternativ unter Verwendung von beispielsweise stetigen Funktionen das Signal aus.

In einer Ausgestaltung der Erfindung werden zur Gewichtung Daten des Signals in zu wertende Daten beziehungsweise in zur Korrektur verfallene Daten unterteilt. Dies ermöglicht eine besonders schnelle Korrektur und Aktualisierung der Position entsprechend der zu wertenden Daten. Beispielsweise wird der Positionsfehler fortlaufend in Relation zum Drehmoment der Antriebsvorrichtung ermittelt. Steigt beispielsweise das Drehmoment der Antriebsvorrichtung aufgrund einer Schwergängigkeit der Verstellung an, so wird die Elastizität einer elastischen Kopplung stärker gespannt. Entsprechend des Drehmoments werden die Daten des Signals zur Gewichtung anders verteilt, indem ein größerer Anteil verfallener Daten zur Korrektur einer größeren Schwergängigkeit zugeordnet werden.

Eine besonders vorteilhafte Ausgestaltung der Erfindung sieht vor, dass als Signale Impulse ausgewertet werden, die in Abhängigkeit von der Antriebsbewegung, insbesondere eines Rotationswinkels der Antriebsbewegung, generiert werden. Zur Auswertung werden die Impulse gezählt und entsprechend der Verstellrichtung addiert beziehungsweise subtrahiert. Zur Korrektur wird die Zählung der Impulse korrigiert.

Als Kenngröße werden unterschiedliche Größen ausgewertet. Als Kenngröße wird eine Antriebsgröße, wie ein Steuersignal für die Bestromung der Antriebsvorrichtung entsprechend der Verstellrichtung, ein Tastverhältnis einer Pulsweitenmodulation zur Regelung der Antriebsgeschwindigkeit, eine Spannung der Kraftfahrzeugbatterie, eine Verstellzeit oder die Anzahl von Impulsen des Signals innerhalb einer Zeiteinheit, der Zeitabstand zwischen zwei Impulsen, eine Temperatur der Antriebsvorrichtung oder des Verstellsystems, eine Motorstromstärke oder ein gemessenes oder berechnetes Drehmoment der Antriebsvorrichtung ausgewertet. Die Kenngröße wird vorzugsweise zyklisch ermittelt und in einem Speicher fortlaufend aktualisiert. Zur Aktualisierung können vorzugsweise auch gleitende Mittelwerte gebildet werden. Einige Kenngröße werden alternativ lediglich kurz vor dem Abschalten des Motorstroms ermittelt und folgend in die Berechnung einbezogen.

Ebenso wird zusätzlich als Kenngröße eine Betriebsgröße verwendet. Die Betriebsgröße ist dabei abhängig von äußeren Betriebseinflüssen auf die Verstellung. Die Betriebsgröße wird detektiert, wie eine Sitzbelegung, ein Einsitzgewicht des Sitzbenutzers, eine Verteilung des Einsitzgewichtes oder eine Umgebungstemperatur und zur Korrektur ausgewertet. Beispielsweise ist das Einsitzgewicht des Sitzbenutzers eine wesentliche Größe, die die Schwergängigkeit der Verstellung beeinflusst. Die Ermittlung des Einsitzgewichtes kann dabei bereits frühzeitig, insbesondere nach dem Einstieg des Sitzbenutzers und dem Schließen der Kraftfahrzeugtür erfolgen.

Die Schwergängigkeiten des Verstellsystems werden vorteilhafterweise zusätzlich über den gesamten möglichen Verstellweg ermittelt und in einem Speicher gespeichert. Anhand der bekannten Schwergängigkeiten ist eine Korrektur für den entsprechenden Verstellbereich möglich, indem als Kenngröße entsprechend der Positionen für die Schwergängigkeiten gespeicherte Daten des Verstellsystems ausgewertet werden.

Um die Auswertung veränderten Bedingungen des Verstellsystems, beispielsweise der Verschmutzung von Verstellelementen und Getriebeelementen, anzupassen, wird als Kenngröße mindestens ein signifikantes Charakteristikum der Verstellung ausgewertet. Dieses signifikante Charakteristikum ist beispielsweise die Ermittlung der Elastizität für ein Blockfahren des verstellbaren Teils. U.a. werden auch mögliche signifikante Schwergängigkeiten, Leichtgängigkeiten oder ein bekanntes Spiel des Verstellsystems als Charakteristikum erfasst.

Besonders vorteilhaft werden als Kenngröße eine Kombination aus einer oder mehrerer Betriebsgrößen, einer oder mehrerer Antriebsgrößen, gespeicherten Schwergängigkeiten und/oder einem oder mehreren signifikanten Charakteristika ausgewertet. Hierbei wird beispielsweise zur Korrektur eine x-dimensionale Klassenmatrix verwendet, wobei x die Anzahl der kombiniert auszuwertenden Kenngrößen angibt. So wird zur Korrektur eine Klasse der Klassenmatrix anhand der Temperatur der Antriebsvorrichtung, des Momentanen Drehmomentes der Antriebsvorrichtung, der Änderung des Antriebsmomentes und dem Einsitzgewicht, sowie der Verteilung des Einsitzgewichtes bestimmt.

In einer besonders vorteilhaften Weiterbildung der Erfindung wird die Antriebsbewegung mittels eines einkanaligen Sensors bestimmt. Der einkanalige Sensor, beispielsweise ein Hallsensor, benötigt lediglich zwei zusätzlich zu verlegende Kabel, ohne dass eine Auswerteelektronik in den Sensor integriert werden müsste. Als Signal wird ein nicht-richtungsdetektierbares Sensorsignal des einkanaligen Sensors ausgewertet. Da die Richtung nicht durch einen einzigen Hallsensor bestimmt werden kann, wird eine Kenngröße, beispielsweise das Steuersignal für die Richtung der Bestromung der Antriebsvorrichtung, mit ausgewertet. Beispielsweise ist bei einem Einsatz eines Ein-Hall-Systems die Sensorik ohne die Auswertung einer zusätzlichen Kenngröße nicht in der Lage die Drehrichtung der Antriebsachse zu unterscheiden, da die generierten Impulse unabhängig von der Drehrichtung sind.

Durch das erfindungsgemäße Verfahren wird eine Erhöhung der Positions-Wiederholgenauigkeit des Verstellsystems, insbesondere mit einer Ein-Hall-Sensorik erzielt, ohne das komplexere und damit kostenintensivere Hallelemente, z.B. Doppelhallsysteme einsetzt werden müssen. Eine Erhöhung der Positions-Wiederholgenauigkeit reduziert wiederum die Wahrscheinlichkeit, dass das Verstellsystem in einen Block, also in einen Endanschlag gefahren wird. Da das Blockfahren eine hohe Belastung der Elektromotoren und der Getriebe ist, kann so besonders vorteilhaft der Verschleiß der Elektromotoren und der Getriebe reduziert werden. Erfolgt dennoch ein Blockfahren, so wird vorteilhafterweise die Positionsermittlung an dieser Stelle neu normiert. Weiterhin verringert sich durch den Einsatz von Einzel-Hallsystemen der Verkabelungsaufwand für die Antriebsvorrichtungen, da keine Richtungsinformation mit übertragen werden muss.

Die Kenngröße wird in einer vorteilhaften Weiterbildung der Erfindung in Doppelfunktion zur Korrektur eines Positionsfehlers und zur Detektion eines Einklemmens eines Gegenstandes oder menschlichen Körperteils ausgewertet. Werden insbesondere mehrere Kenngrößen ausgewertet, so kann aus dem Einsitzgewicht, aus der erwarteten Schwergängigkeit des Verstellsystems und aus der aktuellen Schwergängigkeit des Verstellsystems ein Einklemmfall detektiert werden.

Im Folgenden wird die Erfindung anhand von Ausführungsbeispielen bezugnehmend auf zeichnerische Darstellungen näher erläutert.

Dabei zeigen

Fig 1    eine perspektivische Darstellung eines Sitzgestells mit einer Vielzahl motorisch angetriebener Verstellwege,

Fig 2    eine Auswertevorrichtung und vier Motoren mit jeweils einem Hallsensor,

Fig 3    ein Modell zur Berechnung des von dem Elektromotor abgegeben Drehmomentes,

Fig 4    ein schematischer Ablauf eines Korrekturverfahrens,

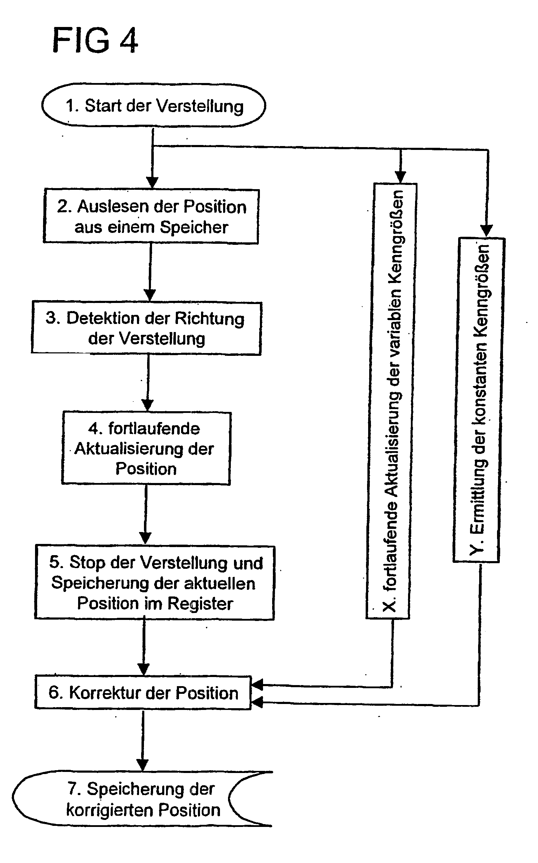

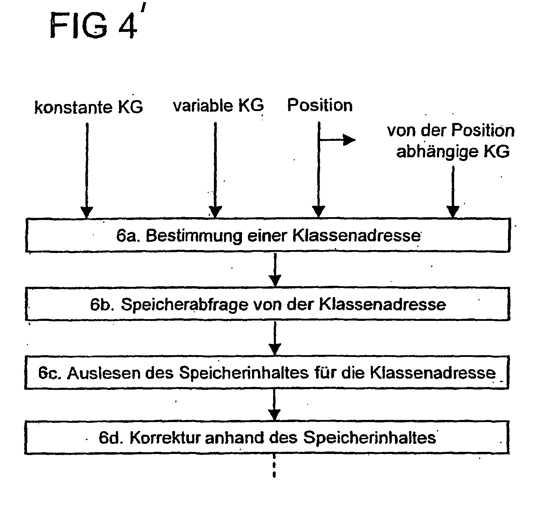

Fig 4'   ein schematisches Detail des Ablaufes des Korrekturverfahrens aus Fig 4, und

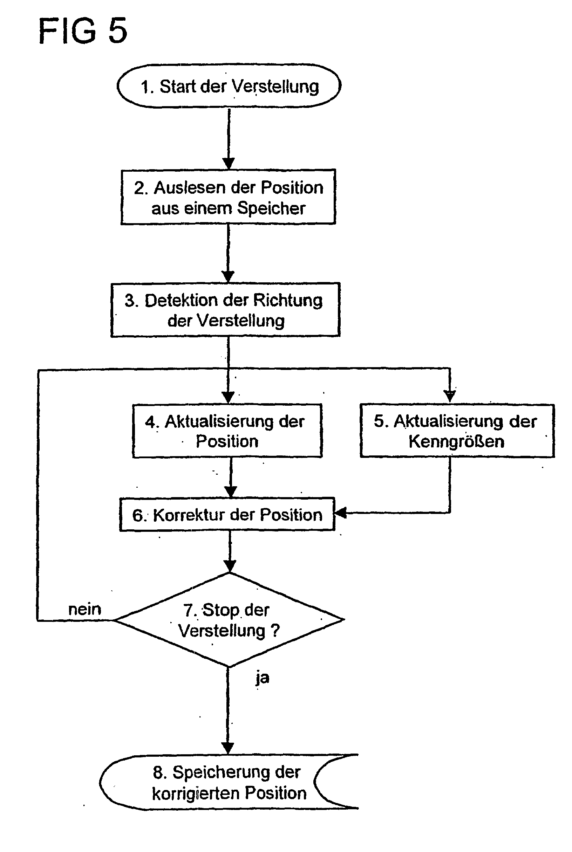

Fig 5    ein weiterer schematischer Ablauf eines Korrekturverfahrens.

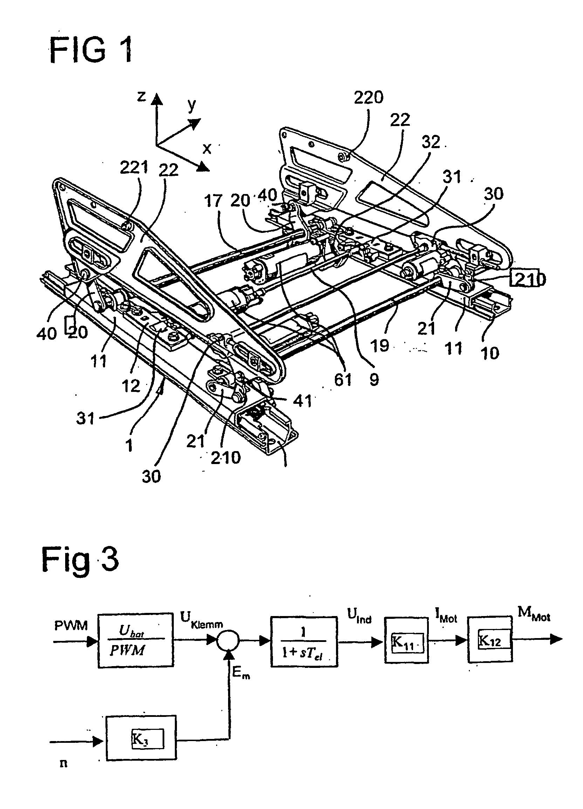

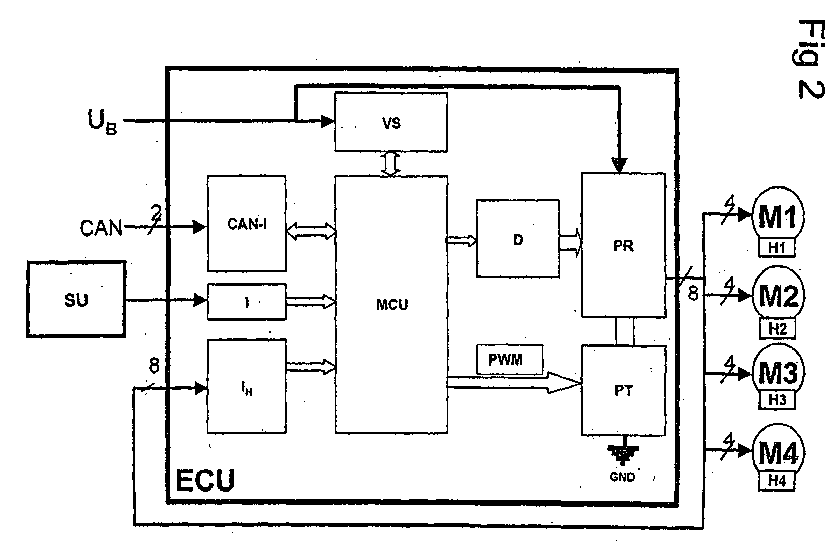

FIG 1 zeigt ein Sitzuntergestell mit einer Vielzahl motorisch angetriebener Verstellwege. Es besteht im wesentlichen aus einem Paar Schienenführungen 1 deren Unterschienen 10 am Fahrzeugboden befestigt sind und deren Oberschienen 11 den Sitzaufbau mit allen Antriebsaggregaten tragen. Zur elektrischen Längsverstellung gehören Getriebe 31, die vom Motor 61 direkt oder über eine flexible Welle 9 indirekt angetrieben werden. Die hintere Sitzhöhenverstellung wird vom Motor 61 über ein Getriebe 32 angetrieben, wobei die Verstellkraft auf die Verbindungswelle 17 übertragen wird, die an ihren Enden in drehfester Verbindung mit den Antriebshebeln 20 steht. Die Enden der Antriebshebel 20 greifen über die Schwenklager 40 an den hinteren Enden der Seitenbleche 22 an, so daß eine Schwenkbewegung der Hebel 20 zu einer Auf- oder Abbewegung des hinteren Seitenblechs 22 führt. Das Getriebe 30 dient dabei lediglich zur Verstellung der Sitztiefe und hat nur einen geringfügigen Einfluss auf die Crashsicherheit des Sitzes.

Die vordere Sitzhöhenverstellung arbeitet in analoger Weise unter Einsatz eines weiteren Motors über ein Getriebe 33 und einer weiteren Verbindungswelle über die Hebelarme 21 und 210. Beide Gurtanschlagspunkte 220 und 221 des Sitzgestells sind an den Seitenteilen 22 angeordnet. Über die Gurtanschlagspunkte wird im Crashfall die Crashkraft in das Sitzgestell eingeleitet, die zu gewünschten und unerwünschten Deformationen von Teilen oder Baugruppen, beispielsweise einer Streckung einer gewinkelten Kontur und einer Verbiegung und damit einer Vorverlagerung in Belastungsrichtung führen.

Um eine Vorverlagerung des Sitzes zu verhindern sind die Getriebe und zugehörige Verstellelemente, wie Spindeln etc., selbsthemmend ausgelegt. Zur Orientierung ist in FIG 1 ein Koordinatenkreuz dargestellt, wobei die x-Richtung in Fahrtrichtung, die y-Richtung quer zur Fahrtrichtung und die z-Richtung nach oben, senkrecht zur xy-Ebene weist. Die Getriebe 30, 31, 32 und 33 sowie die flexible Welle 9 werden für eine Verstellung elastisch verformt, bis das an die Verstellung angreifende Verstellkraft größer ist als die Selbsthemmung, beziehungsweise die Reibungskraft der Schwergängigkeit des Verstellsystems.

In Fig 2 ist eine Auswertevorrichtung ECU und vier Motoren M1 bis M4 mit jeweils einem Hallsensor H1 bis H4 dargestellt. Eine Einheit aus Elektromotor M1 und Hallsensor H1, respektive M2, M3, M4 und H2, H3 und H4 ist mit der Auswertevorrichtung ECU über vier Leitungen (4) einer Verbindung angeschlossen. Zwei dieser Leitungen sind zur Übertragung des Motorstroms mit den Leistungsrelais' PR der Auswertevorrichtung ECU verbunden. Die beiden anderen Leitungen sind mit dem Interface $I_H$ für die Hallsensoren H1 bis H4 der Auswertevorrichtung ECU verbunden. Die Signale der Hallsensoren H1 bis H4 werden in der Schnittstelle $I_H$ in rechentechnisch verarbeitbare Impulse gewandelt und an den Mikrocontroller MCU der Auswertevorrichtung ECU weitergeleitet.

Der Mikrocontroller steuert über einen Treiber D die Leistungsrelais' PR. Zusätzlich generiert der Mikrocontroller MCU ein pulsweitenmoduliertes Steuersignal PWM zur Ansteuerung der Leistungstransistoren PT. Die Leistungstransistoren PT dienen zur Steuerung des jeweiligen Motorstromes und sind mit den Leistungsrelais' verbunden. Um beispielsweise Parameter des Systems in den Mikrocontroller MCU einzulesen und zu speichern weist der Mikrocontroller MCU einen integrierten Flash-Speicher auf. Der Mikrocontroller MCU ist mit einer mit der Spannung $U_B$ der Kraftfahrzeugbatterie Spannungsversorgung VS verbunden, die den Mikrocontroller mit der Betriebsspannung von in der Regel 5V versorgt. Zusätzlich weist die Spannungsversorgung VS einen Watchdog zum Aufwecken der Auswertevorrichtung ECU aus einem Standby-Modus auf.

Weiterhin ist der Mikrocontroller MCU mit einem Eingangsinterface I verbunden, dass eine Schnittstelle zu einer Betätigungsvorrichtung SU, insbesondere einem Schalterblock SU, zur Ansteuerung der Elektromotoren M1 bis M4 bildet. Ein weiteres Interface CAN-I verbindet den Mikrocontroller MCU mit einem CAN-Bus, der einen Informations- und Datenaustausch mit weiteren Funktionseinheiten des Kraftfahrzeugs ermöglicht.

Fig 3 zeigt ein Modell zur Berechnung des von dem Elektromotor M1 bis M4 abgegeben Drehmomentes $M_{Mot}$ als Kenngröße. Die an den Klemmen des Elektromotors M1, M2, M3 oder M4 anliegende Klemmspannung $U_{Klemm}$ wird aus der Batteriespannung $U_{bat}$ und dem Tastverhältnis PWM der Pulsweitenmodulation errechnet. Der Klemmspannung $U_{Klemm}$ entgegen wirkt die von der Drehzahl n des Elektromotors M1, M2, M3 oder M4 über den Faktor $K_3$ abhängige Spannung $E_m$. In Abhängigkeit von dem Tiefpassverhalten des Elektromotors M1, M2, M3 oder M4 wird die Gegeninduktionsspannung $U_{Ind}$ des Elektromotors M1, M2, M3 oder M4 berechnet. Über einen Faktor $K_{11}$ wird der Motorstrom $I_{Mot}$ und über einen weiteren Faktor $K_{12}$ wird das Drehmoment des Elektromotors M1, M2, M3 oder M4 berechnet. Demgemäss wird das Drehmoment des Motors M1, M2, M3 oder M4 anhand der folgenden Formel im Mikrocontroller MCU bestimmt:

$$M_{Motor} = \left(U_{Klemm} - K_3 * n\right)\left(\frac{1}{1 + sT_{el}}\right) * K_{11} * K_{12}$$

In Fig 4 ist ein Ablauf eines Korrekturverfahrens schematisch dargestellt. Im Schritt 1 wird die Verstellung gestartet, indem der Insasse einen Taster der Betätigungsvorrichtung drückt, um den Kraftfahrzeugsitz in eine andere Position zu verstellen. Zur Verstellung wird ein Elektromotor M1, M2, M3 oder M4 von der Steuerungsvorrichtung ECU bestromt.

Vor dem Beginn der Rotationsbewegung des Elektromotors M1, M2, M3 oder M4 wird infolge von Schritt 2 die bisherige Stillstandsposition aus einem Speicher ausgelesen und in ein Register des Mikrocontrollers MCU geladen. Folgend wird in Schritt 3 die Verstellrichtung anhand einer Steuergröße des Mikrocontrollers bestimmt. Die Steuergröße kann zur späteren Korrektur zusätzlich als Kenngröße ausgewertet werden.

In Abhängigkeit von den generierten Impulsen der Hallsensoren H1, H2, H3 oder H4 wird die Position der Verstellung fortlaufend aktualisiert, indem die Impulse von einem Ist-Wert entsprechend der Richtung der Verstellung subtrahiert bzw. addiert werden. Jede automatisch einstellbare Position entspricht dabei einem Zählwert. Wird die Verstellung gestoppt, indem der Taster losgelassen wird, oder die Verstellung erreicht eine automatisch einstellbare, zu diesem Zweck gespeicherte Position, wird die aktuelle Position in einem Register des Mikrocontrollers MCU zwischengespeichert.

Während der Schritte 2 bis 5 werden zeitvariable oder von der Verstellbewegung abhängige Kenngrößen fortlaufend in dem Prozess X aktualisiert. In dem Prozess Y werden zudem zeitinvariante Kenngrößen ermittelt und in einem Speicher, beispielsweise einem RAM zwischengespeichert. In Schritt 6 wird die in dem Register des Mikrocontrollers MCU zwischengespeicherte Position in Abhängigkeit von den Kenngrößen korrigiert. Die korrigierte Position wird in einem folgenden Schritt 7 in einem nichtflüchtigen Speicher abgelegt. Für eine erneute Verstellung wird dieselbe korrigierte Position in einem, in Fig 4 nicht dargestellten Schritt 4', wiederum aus dem nichtflüchtigen Speicher ausgelesen.

In Fig 4' ist der Schritt 6 der Fig 4 detailliert dargestellt. Aus den konstanten Kenngrößen KG, den variablen Kenngrößen KG und der Position, sowie von der Position abhängige Kenngrößen KG in Schritt 6a wird eine oder mehrere Klassenadressen bestimmt. Jeder möglichen Klassenadresse ist wiederum ein konstanter oder von weiteren Bedingungen, beispielsweise der Verstellung abhängiger Speicherinhalt zugeordnet. Der Speicherinhalt bildet dabei den Positionsfehler durch die zumindest temporäre asynchrone Bewegung ab. Dabei ist der Inhalt der Fehler identisch selbst oder ein transformierter Wert, der in einem späteren Algorithmus im Mikrocontroller MCU berechnet wird. Demgemäss wird in Schritt 6b der Speicher nach der entsprechenden Klassenadresse abgefragt und in Schritt 6c der Speicherinhalt für die Klassenadresse ausgelesen. Anschließend erfolgt in Schritt 6d die Korrektur der Position anhand des Speicherinhalts, wobei die eingehenden Signale der Hallsensoren H1, H2, H3 oder H4 entsprechend gewichtet werden.

Fig 5 zeigt ein alternatives Verfahren zu Korrektur des Positionsfehlers. Die Schritte 1 bis 3 entsprechend dabei den Schritten 1 bis 3 der Fig 4. In Schritt 4 wird die Position um einige Zählwerte aktualisiert. Gleichzeitig werden in Schritt 5 die Kenngrößen aktualisiert. Nachfolgend wird in Schritt 6 in Echtzeit der Positionswert, beispielsweise anhand des ermittelten Drehmomentenbedarfs des Elektromotors M1 bis M4, korrigiert. Folgt in Schritt 7 kein Ende der Verstellung, so wird in den nun folgenden Schritte 4 und 5 die Position und die Kenngrößen in Abhängigkeit von der zuvor korrigierten Position erneut aktualisiert. Wird die Verstellung in Schritt 7 gestoppt, erfolgt die Speicherung der letzten korrigierten Position in Schritt 8.

**Bezugszeichenliste**

| | |
|---|---|
| 1 | Schienenführung |
| 9 | flexible Welle |
| 10 | untere Führungsschiene |
| 11 | obere Führungsschiene |
| 17, 19 | Verbindungswelle |
| 20, 21 | Antriebshebel |
| 22 | Seitenblech, Seitenteil |
| 210 | Hebelarm |
| 220, 221 | Gurtanschlagspunkt |
| 30, 31, 32, 33 | Getriebe |
| 40 | Schwenklager |
| M1, M2, M3, M4, 61 | Elektromotoren |
| H1, H2, H3, H4 | Hallsensoren |
| $I_H$ | Auswerteschaltung, Schnittstelle der Hallsensoren |
| ECU | Steuerungsvorrichtung, Auswertevorrichtung, Mikrocontroller |
| SU | Betätigungsvorrichtung, Schalterblock |
| I | Schnittstelle der Betätigungsvorrichtung |
| CAN | CAN-Bus |
| CAN-I | CAN-Bus Schnittstelle |
| $U_B$ | Batteriespannung |
| GND | Masse |
| PT | Leistungstransistoren, Leistungsstufe |
| PR | Leistungsrelais', Leistungsschalter |
| D | Treiber |
| MCU | Mikrocontroller |
| VS | Spannungsversorgung der integrierten Schaltkreise |

KG                      Kenngröße

**Patentansprüche**

1. Verfahren zur Bestimmung einer Position eines durch eine elektrische Antriebsvorrichtung verstellbaren Teils eines Kraftfahrzeugsitzes durch Auswertung eines in Abhängigkeit einer Antriebsbewegung der elektrischen Antriebsvorrichtung generierten Signals,
**dadurch gekennzeichnet, dass**

   - die elektrische Antriebsvorrichtung mit dem verstellbaren Teil derart elastisch gekoppelt ist, dass zumindest temporär eine asynchrone Bewegung zwischen der elektrischen Antriebsvorrichtung und dem verstellbaren Teil auftreten kann,
   - und zusätzlich das Drehmoment ($M_{Mot}$) und/oder mindestens eine mit diesem korrelierende Kenngröße der elektrischen Antriebsvorrichtung zur Korrektur eines durch eine asynchrone Bewegung zwischen der elektrischen Antriebsvorrichtung und dem verstellbaren Teil verursachten Positionsfehlers ausgewertet wird.

2. Verfahren nach Anspruch 1, **dadurch gekennzeichnet, dass** die mit dem Drehmoment ($M_{Mot}$) korrelierende Kenngröße der elektrischen Antriebsvorrichtung eine Antriebsspannung ($U_{Klemm}$), ein Antriebsstrom ($I_{Mot}$) und/oder eine Drehzahl (n) ist.

3. Verfahren nach Anspruch 1 oder 2, **dadurch gekennzeichnet, dass** der Positionsfehler in Abhängigkeit von einer zur Korrektur zugeordneten Klasse korrigiert wird, und die für den Korrekturfall aktuelle Klasse durch einen Vergleich des Drehmoments ($M_{Mot}$) und/oder mindestens einer korrelierenden Kenngröße mit einem oder mehreren Schwellwerten ermittelt wird.

4. Verfahren nach Anspruch 3, **dadurch gekennzeichnet, dass** jeder Klasse ein Korrekturfaktor zur Korrektur des Positionsfehlers zugeordnet wird.

5. Verfahren nach einem der Ansprüche 3 oder 4, **dadurch gekennzeichnet, dass** jeder Klasse eine Korrekturkonstante zur Korrektur des Positionsfehlers zugeordnet wird.

6. Verfahren nach einem der vorhergehenden Ansprüche, **dadurch gekennzeichnet, dass** zur Korrektur das Signal in Abhängigkeit von Drehmoment ($M_{Mot}$) und/oder mindestens einer korrelierenden Kenngröße gewichtet wird.

7. Verfahren nach Anspruch 6, **dadurch gekennzeichnet, dass** zur Gewichtung Daten des Signals in additive Daten und subtraktive Daten unterteilt werden, und die aktuelle Position entsprechend der additiven Daten beziehungsweise subtraktiven Daten in Verstellrichtung beziehungsweise gegen die Verstellrichtung korrigiert wird.

8. Verfahren nach Anspruch 6 oder 7, **dadurch gekennzeichnet, dass** zur Gewichtung Daten des Signals in zu wertende Daten beziehungsweise in zur Korrektur verfallene Daten unterteilt werden, und die Position entsprechend der zu wertenden Daten aktualisiert wird.

9. Verfahren nach einem der Ansprüche 6 bis 8, **dadurch gekennzeichnet, dass** als Signale Impulse ausgewertet werden, die in Abhängigkeit von der Antriebsbewegung, insbesondere eines Rotationswinkels der Antriebsbewegung, generiert werden, zur Auswertung die Impulse gezählt und entsprechend der Verstellrichtung addiert beziehungsweise subtrahiert werden, und zur Korrektur die Zählung der Impulse korrigiert wird.

10. Verfahren nach den Ansprüchen 7 und 9, **dadurch gekennzeichnet, dass** zur Korrektur

   - die Impulse zu der Position addiert werden, wenn die Antriebsvorrichtung auf Grund eines Steuerungssignals als Kenngröße für die Verstellrichtung bestromt wird, und
   - die Impulse von der Position subtrahiert werden, wenn die Bestromung Antriebsvorrichtung für die Verstellrichtung beendet wird,
   - die Impulse von der Position subtrahiert werden, wenn die Antriebsvorrichtung auf Grund eines Steuerungssignals als Kenngröße für die Gegen-Verstellrichtung bestromt wird, und
   - die Impulse von der Position addiert werden, wenn die Bestromung der Antriebsvorrichtung für die Gegen-Verstellrichtung beendet wird.

**11.** Verfahren nach einem der vorhergehenden Ansprüche, **dadurch gekennzeichnet, dass** zusätzlich eine Antriebsgröße, insbesondere

- ein Steuersignal für die Verstellrichtung,
- ein Tastverhältnis einer Pulsweitenmodulation,
- eine Batteriespannung,
- eine Verstellzeit,
- eine Antriebstemperatur,
- ein gemessenes oder berechnetes Drehmoment, oder
- eine Kombination mehrerer Antriebsgrößen der Antriebsvorrichtung

ausgewertet wird.

**12.** Verfahren nach einem der vorhergehenden Ansprüche, **dadurch gekennzeichnet, dass** zusätzlich eine Betriebsgröße, insbesondere

- eine Sitzbelegung,
- ein Einsitzgewicht (des Sitzbenutzers),
- eine Verteilung des Einsitzgewichtes,
- eine Umgebungstemperatur, oder
- eine Kombination mehrerer Betriebsgrößen des Sitzes oder einer oder mehrerer Betriebsgrößen mit einer oder mehrerer Antriebsgrößen

ausgewertet wird.

**13.** Verfahren nach einem der vorhergehenden Ansprüche, **dadurch gekennzeichnet, dass** zusätzlich für die Positionen gespeicherte Schwergängigkeiten des Verstellsystems ausgewertet werden.

**14.** Verfahren nach einem der vorhergehenden Ansprüche, **dadurch gekennzeichnet, dass** zusätzlich mindestens ein signifikantes Charakteristikum der Verstellung ausgewertet wird.

**15.** Verfahren nach einem der Ansprüche 7 bis 14, **dadurch gekennzeichnet, dass** eine Kombination aus einer oder mehrerer Betriebsgrößen, einer oder mehrerer Antriebsgrößen, gespeicherten Schwergängigkeiten und/oder eines oder mehrerer signifikanter Charakteristika ausgewertet werden.

**16.** Verfahren nach einem der vorhergehenden Ansprüche, **dadurch gekennzeichnet, dass** die Antriebsbewegung mittels eines einkanaligen Sensors bestimmt wird, indem als Signal ein nicht-richtungsdetektierbares Sensorsignal des einkanaligen Sensors ausgewertet wird.

**17.** Verfahren nach einem der vorhergehenden Ansprüche, **dadurch gekennzeichnet, dass** das Drehmoment ($M_{Mot}$) und/oder mindestens eine korrelierende Kenngröße in Doppelfunktion zur Korrektur eines Positionsfehlers und zur Detektion eines Einklemmens eines Gegenstandes oder menschlichen Körperteils ausgewertet wird.

**18.** Vorrichtung zur Bestimmung einer Position eines durch eine elektrische Antriebsvorrichtung verstellbaren Teils eines Kraftfahrzeugsitzes durch Auswertung eines in Abhängigkeit einer Antriebsbewegung der elektrischen Antriebsvorrichtung generierten Signals,
**dadurch gekennzeichnet, dass**

- die elektrische Antriebsvorrichtung mit dem verstellbaren Teil derart elastisch gekoppelt ist, dass zumindest temporär eine asynchrone Bewegung zwischen der elektrischen Antriebsvorrichtung und dem verstellbaren Teil auftreten kann,
- und zusätzlich das Drehmoment ($M_{Mot}$) und/oder mindestens eine mit diesem korrelierende Kenngröße der elektrischen Antriebsvorrichtung zur Korrektur eines durch eine asynchrone Bewegung zwischen der elektrischen Antriebsvorrichtung und dem verstellbaren Teil verursachten Positionsfehlers ausgewertet wird,
- wobei Mittel zur Korrektur eines anhand der Auswertung des Drehmoments ($M_{Mot}$) und/oder der korrelierenden Kenngröße ($U_{Klemm}$, $I_{Mot}$, n) ermittelten Positionsfehlers vorgesehen sind.

**19.** Vorrichtung nach Anspruch 18, **dadurch gekennzeichnet, dass** die mit dem Drehmoment ($M_{Mot}$) korrelierende Kenngröße der elektrischen Antriebsvorrichtung eine Antriebsspannung ($U_{Klemm}$), ein Antriebsstrom ($I_{Mot}$) und/oder eine Drehzahl (n) ist.

**Claims**

1.  Method for determining a position of a part of a motor vehicle seat which can be displaced by an electric drive device by evaluating a signal generated in dependence on a drive movement of the electric drive device **characterised in that**

    -   the electric drive device is elastically coupled to the displaceable part so that an at least temporary asynchronous movement can occur between the electric drive device and the displaceable part,

    -   and in addition the torque ($M_{mot}$) and/or at least one parameter of the electric drive device correlating with same is evaluated for correcting a position error caused by an asynchronous movement between the electric drive device and the displaceable part.

2.  Method according to claim 1, **characterised in that** the parameter of the electric drive device correlating with the torque ($M_{Mot}$) is a drive voltage ($U_{Klemm}$), a drive current ($I_{Mot}$) and/or a speed (n).

3.  Method according to claim 1 or 2, **characterised in that** the position error is corrected in dependence on a class assigned to the correction, and the actual class for the correction case is determined by comparing the torque ($M_{Mot}$) and/or at least one correlating parameter with one or more threshold values.

4.  Method according to claim 3, **characterised in that** each class is assigned a correction factor for correcting the position error.

5.  Method according to one of claims 3 or 4, **characterised in that** each class is assigned a correction constant for correcting the position error.

6.  Method according to one of the preceding claims, **characterised in that** for correction the signal is weighted in dependence on the torque ($M_{mot}$) and/or at least one correlating parameter.

7.  Method according to claim 6, **characterised in that** for weighting data from the signals are divided into additive data and subtractive data and the actual position is corrected in the displacement direction and opposite the displacement direction corresponding to the additive data or subtractive data respectively.

8.  Method according to claim 6 or 7, **characterised in that** for weighting data of the signals are divided into data to be evaluated or data dropped for correction, and the position is up-dated corresponding to the data to be evaluated.

9.  Method according to one of claims 6 to 8, **characterised in that** as signals pulses are evaluated which are generated in dependence on the drive movement, more particularly a rotational angle of the drive movement, for evaluation the pulses are counted and added or subtracted according to the displacement direction, and for correction the counting of the pulses is corrected.

10. Method according to claims 7 and 9, **characterised in that** for correction

    •   the pulses are added to the position when the drive device is supplied with current as a result of a control signal as parameter for the displacement direction, and
    •   the pulses are subtracted from the position when the supply of current to the drive device for the displacement direction is terminated,
    •   the pulses are subtracted from the position when the drive device is supplied with current as a result of a control signal as characteristic value for the counter displacement direction, and
    •   the pulses of the position are added when the supply of current to the drive device for the counter displacement direction is terminated.

11. Method according to one of the preceding claims, **characterised in that** as parameter is evaluated a drive parameter, more particularly

- a control signal for the displacement direction
- a scanning ratio of a pulse width modulation
- a battery voltage
- a displacement time
- a drive temperature
- a measured or calculated torque or

a combination of several drive parameters of the drive device.

12. Method according to one of the preceding claims, **characterised in that** as parameter is evaluated an operating parameter, more particularly

- a seat occupancy
- a seated weight (of the seat user)
- a distribution of the seated weight
- an atmospheric temperature, or

a combination of several operating parameters of the seat or of one or more operating parameters with one or more drive values.

13. Method according to one of the preceding claims, **characterised in that** as parameter for the positions are evaluated the stored sluggish actions of the displacement system.

14. Method according to one of the preceding claims, **characterised in that** as parameter is evaluated at least one significant characteristic of the displacement.

15. Method according to one of claims 7 to 14, **characterised in that** as parameter is evaluated a combination of one or more operating values, one or more drive values, stored sluggish actions and/or one of more significant characteristics.

16. Method according to one of the preceding claims, **characterised in that** the drive movement is determined by a single-channel sensor **in that** as signal is evaluated a non direction detectable sensor signal of the single-channel sensor.

17. Method according to one of the preceding claims, **characterised in that** the torque ($M_{mot}$) and/or at least one correlating parameter is evaluated in a double function for correcting a position error and for detecting the jamming of an object or part of the human body.

18. Device for determining a position of a part of a motor vehicle seat which can be displaced by an electric drive device by evaluating a signal generated in dependence on a drive movement of the electric drive device **characterised in that**

- the electric drive device is elastically coupled to the displaceable part so that an asynchronous movement can occur at lest temporarily between the electric drive device and the displaceable part,

- and additionally the torque ($M_{Mot}$) and/or at least one parameter of the electric drive device correlating with same for correcting a position error caused by an asynchronous movement between the electric drive device and the displaceable part, and

- whereby means are provided for correcting a position error determined from the evaluation of the torque ($M_{Mot}$) and/or the correlating parameter ($U_{klemm}$, $I_{Mot}$, n).

19. Device according to claim 18, **characterised in that** the parameter of the electric drive device correlating with the torque ($M_{Mot}$) is a drive voltage ($U_{Klemm}$), a drive current ($I_{mot}$) and/or a speed (n).

**Revendications**

1. Procédé pour déterminer une position d'une partie, déplaçable par un dispositif d'entraînement électrique, d'un siège de véhicule automobile en exploitant un signal généré en fonction d'un mouvement d'entraînement du dispositif d'entraînement électrique,
   **caractérisé en ce que** :

   -- le dispositif d'entraînement électrique est couplé de façon élastique à la pièce déplaçable de telle façon qu'il peut se produire au moins temporairement un mouvement asynchrone entre le dispositif d'entraînement électrique et la partie déplaçable,
   -- et on exploite additionnellement le couple de rotation ($M_{mot}$) et/ou au moins une grandeur caractéristique du dispositif d'entraînement électrique en corrélation avec ce couple, pour la correction d'une erreur de position provoquée par un mouvement asynchrone entre le dispositif d'entraînement électrique et la partie déplaçable.

2. Procédé selon la revendication 1, **caractérisé en ce que** la grandeur caractéristique du dispositif d'entraînement électrique en corrélation avec le couple de rotation ($M_{mot}$) est une tension d'entraînement ($U_{bornes}$), un courant d'entraînement ($I_{mot}$) et/ou une vitesse de rotation (n).

3. Procédé selon l'une ou l'autre des revendications 1 et 2, **caractérisé en ce que** l'erreur de position est corrigée en fonction d'une classe associée à la correction, et **en ce que** la classe actuelle pour le cas de correction est déterminée par une comparaison du couple de rotation ($M_{mot}$) et/ou d'une grandeur caractéristique en corrélation avec une ou plusieurs valeurs seuil.

4. Procédé selon la revendication 3, **caractérisé en ce qu'**un facteur de correction pour la correction de l'erreur de position est associé à chaque classe.

5. Procédé selon l'une ou l'autre des revendications 3 et 4, **caractérisé en ce qu'**une constante de correction pour la correction de l'erreur de position est associée à chaque classe.

6. Procédé selon l'une des revendications précédentes, **caractérisé en ce que** pour la correction le signal est pondéré en fonction du couple de rotation ($M_{mot}$) et/ou d'au moins une grandeur caractéristique en corrélation.

7. Procédé selon la revendication 6, **caractérisé en ce que**, pour la pondération, les données du signal sont subdivisées en données additives et en données soustractives, et la position actuelle est corrigée en correspondance des données additives ou respectivement des données soustractives dans la direction de déplacement ou respectivement à l'encontre de la direction de déplacement.

8. Procédé selon l'une ou l'autre des revendications 6 et 7, **caractérisé en ce que**, pour la pondération, les données du signal sont subdivisées en données à exploiter ou respectivement en données caduques pour la correction, et **en ce que** la position est actualisée en correspondance des données à exploiter.

9. Procédé selon l'une des revendications 6 à 8, **caractérisé en ce que** l'on exploite à titre de signaux des impulsions qui sont générées en fonction du mouvement d'entraînement, en particulier d'un angle de rotation du mouvement d'entraînement, **en ce que** pour l'exploitation les impulsions sont comptées et additionnées ou respectivement soustraites selon la direction de déplacement, et **en ce que** pour la correction le comptage des impulsions est corrigé.

10. Procédé selon les revendications 7 et 9, **caractérisé en ce que**, pour la correction :

    -- les impulsions sont ajoutées à la position si le dispositif d'entraînement et alimenté pour la direction de déplacement en raison d'un signal de commande à titre de grandeur caractéristique, et
    -- les impulsions sont soustraites de la position si l'alimentation du dispositif d'entraînement pour la direction de déplacement est terminée,
    -- les impulsions sont soustraites de la position si le dispositif d'entraînement est alimenté pour la direction inverse à la direction de déplacement en raison d'un signal de commande à titre de grandeur caractéristique, et
    -- les impulsions sont ajoutées à la position si l'alimentation du dispositif d'entraînement pour la direction inverse à la direction de déplacement est terminée.

**11.** Procédé selon l'une des revendications précédentes, **caractérisé en ce que** l'on exploite en supplément une grandeur relative à l'entraînement, en particulier :

- -- un signal de commande pour la direction de déplacement,
- -- un rapport de palpage d'une modulation en largeur d'impulsion,
- -- une tension de batterie,
- -- un temps de déplacement,
- -- une température d'entraînement,
- -- un couple de rotation mesuré ou calculé, ou
- -- une combinaison de plusieurs grandeurs relatives au dispositif d'entraînement.

**12.** Procédé selon l'une des revendications précédentes, **caractérisé en ce que** l'on exploite en supplément une grandeur relative au fonctionnement, en particulier :

- -- une occupation du siège,
- -- un poids assis (de l'occupant du siège),
- -- une répartition du poids assis,
- -- une température environnante, ou
- -- une combinaison de plusieurs grandeurs relatives au fonctionnement du siège, ou d'une ou plusieurs grandeurs relatives au fonctionnement avec une ou plusieurs grandeurs relatives à l'entraînement.

**13.** Procédé selon l'une des revendications précédentes, **caractérisé en ce que** l'on exploite en supplément des difficultés du système de déplacement mémorisées pour les positions.

**14.** Procédé selon l'une des revendications précédentes, **caractérisé en ce que** l'on exploite en supplément au moins une caractéristique significative du déplacement.

**15.** Procédé selon l'une des revendications 7 à 14, **caractérisé en ce que** l'on exploite une combinaison d'une ou plusieurs grandeurs relatives au fonctionnement, d'une ou plusieurs grandeurs relatives à l'entraînement, des difficultés mémorisées, et/ou d'une ou plusieurs caractéristiques significatives.

**16.** Procédé selon l'une des revendications précédentes, **caractérisé en ce que** le mouvement d'entraînement est déterminé au moyen d'un capteur monocanal, en exploitant à titre de signal un signal du capteur monocanal non détectable en direction.

**17.** Procédé selon l'une des revendications précédentes, **caractérisé en ce que** le couple de rotation ($M_{mot}$) et/ou au moins une grandeur caractéristique en corrélation est exploitée en fonction double pour la correction d'une erreur de position et pour la détection d'un coincement d'un objet ou d'une partie corporelle humaine.

**18.** Dispositif pour déterminer une position d'une partie d'un siège de véhicule automobile déplaçable au moyen d'un dispositif d'entraînement électrique, en exploitant un signal généré en fonction d'un mouvement d'entraînement du dispositif d'entraînement électrique, **caractérisé en ce que** :

- -- le dispositif d'entraînement électrique est couplé de manière élastique à la partie déplaçable de telle façon qu'il peut se produire au moins temporairement un mouvement asynchrone entre le dispositif d'entraînement électrique et la partie déplaçable,
- -- le couple de rotation ($M_{mot}$) et/ou au moins une grandeur caractéristique en corrélation avec celui-ci, du dispositif d'entraînement électrique, est exploité en supplément pour la correction d'une erreur de position provoquée par un mouvement asynchrone entre le dispositif d'entraînement électrique et la partie déplaçable, et
- -- dans lequel sont prévus des moyens pour corriger une erreur de position déterminer à l'aide de l'exploitation du couple de rotation ($M_{mot}$) et/ou de la grandeur caractéristique en corrélation ($U_{bornes}$, $I_{mot}$, $n$).

**19.** Dispositif selon la revendication 18, **caractérisé en ce que** la grandeur caractéristique du dispositif d'entraînement électrique en corrélation avec le couple de rotation ($M_{mot}$) est une tension d'entraînement ($U_{bornes}$), un courant d'entraînement ($I_{mot}$) et/ou une vitesse de rotation ($n$).

# FIG 1

# Fig 3

$$\text{PWM} \rightarrow \boxed{\frac{U_{bat}}{PWM}} \xrightarrow{U_{Klemm}} \bigcirc \rightarrow \boxed{\frac{1}{1+sT_{el}}} \xrightarrow{U_{Ind}} \boxed{K_{11}} \xrightarrow{I_{Mot}} \boxed{K_{12}} \xrightarrow{M_{Mot}}$$

$$n \rightarrow \boxed{K_3} \xrightarrow{E_m}$$

Fig 2

EP 1 385 716 B1

# FIG 4

```
┌─────────────────────────────┐
│   1. Start der Verstellung   │
└─────────────────────────────┘
              │
              ▼
┌─────────────────────────────┐
│   2. Auslesen der Position   │
│      aus einem Speicher      │
└─────────────────────────────┘
              │
              ▼
┌─────────────────────────────┐
│   3. Detektion der Richtung  │
│       der Verstellung        │
└─────────────────────────────┘
              │
              ▼
┌─────────────────────────────┐
│      4. fortlaufende         │
│      Aktualisierung der      │
│          Position            │
└─────────────────────────────┘
              │
              ▼
┌─────────────────────────────┐
│ 5. Stop der Verstellung und  │
│   Speicherung der aktuellen  │
│     Position im Register     │
└─────────────────────────────┘
              │
              ▼
┌─────────────────────────────┐
│   6. Korrektur der Position  │◄───
└─────────────────────────────┘
              │
              ▼
┌─────────────────────────────┐
│    7. Speicherung der        │
│    korrigierten Position     │
└─────────────────────────────┘
```

X. fortlaufende Aktualisierung der variablen Kenngrößen

Y. Ermittlung der konstanten Kenngrößen

# FIG 4'

konstante KG    variable KG    Position

von der Position
abhängige KG

| 6a. Bestimmung einer Klassenadresse |
|---|

| 6b. Speicherabfrage von der Klassenadresse |
|---|

| 6c. Auslesen des Speicherinhaltes für die Klassenadresse |
|---|

| 6d. Korrektur anhand des Speicherinhaltes |
|---|

# FIG 5

```
        ┌─────────────────────────────┐
        │  1. Start der Verstellung   │
        └─────────────────────────────┘
                      │
                      ▼
        ┌─────────────────────────────┐
        │  2. Auslesen der Position   │
        │     aus einem Speicher      │
        └─────────────────────────────┘
                      │
                      ▼
        ┌─────────────────────────────┐
        │  3. Detektion der Richtung  │
        │       der Verstellung       │
        └─────────────────────────────┘
```

| 4. Aktualisierung der Position | 5. Aktualisierung der Kenngrößen |

**6. Korrektur der Position**

**7. Stop der Verstellung ?**  nein  ja

**8. Speicherung der korrigierten Position**